# EUROPEAN PATENT SPECIFICATION

(11) **EP 4 181 749 B1**
(45) Date of publication and mention of the grant of the patent: **09.12.2026**
(21) Application number: 21749250.3
(22) Date of filing: 15.07.2021
(51) Int. Cl.: A47K 3/38, A47H 1/022, A47H 1/142

(54) **IMPROVEMENTS IN OR RELATING TO SHOWER RODS**
VERBESSERUNGEN AN ODER IM ZUSAMMENHANG MIT DUSCHSTANGEN
PERFECTIONNEMENTS APPORTÉS OU RELATIFS À DES BARRES DE DOUCHE

(30) Priority: 16.07.2020 GB 202010998
(43) Date of publication of application: 24.05.2023
(73) Proprietor: Norcros Group (Holdings) Limited, Andover, Hampshire SP10 5AW (GB)
(72) Inventor: PEGDEN, Peter James Harold, Hull, West Yorkshire HU7 3FB (GB)
(74) Representative: Murgitroyd & Company
(86) International application number: PCT/GB2021/051819
(87) International publication number: WO 2022/013559

(56) References cited:
- GB-A- 2 530 068
- US-A- 2 199 851
- US-A- 420 486
- US-A- 972 544
- US-A1- 2014 259 368

## Description

### Field of the Invention

This invention relates to a shower rod assembly that is mounted between walls or suitable mounting points in a bathroom to support a shower curtain.

### Background to the Invention

A popular form of shower rod is telescopically adjustable in length and is mounted by biasing the opposite ends outwardly and into frictional engagement with facing walls. GB2530068A discloses a shower rod assembly. An internal cam arrangement then locks the rod sections together when in the desired position. This arrangement has the advantage that it does not require perforation of the walls by screws or the like.

By and large the frictional engagement provided by this arrangement is satisfactory but, over time or when subjected to a lateral force, the frictional engagement can be overcome and the rod displaces out of position and typically becomes detached. Further, when the rod is dis-mounted, for example for cleaning, it is not always easy to re-position the rod in the same location.

It is an object of the invention to provide a shower rod that will go at least some way in addressing the drawbacks mentioned above; or which will at least provide a novel and useful alternative.

### Summary of the Invention

Accordingly, in one aspect, the invention provides a method of securing a shower rod assembly between facing walls as defined in claim 1.

Preferably the method comprises securing said support brackets to said facing walls using an adhesive.

Preferably the method comprises securing said support brackets to said facing walls using double-sided adhesive pad.

In a second aspect the invention provides a shower rod assembly for mounting a shower rod between facing walls as defined in claim 4.

Preferably said pair of support brackets are configured to surround said end parts of said rod.

Preferably said pair of support brackets are configured for attachment to said facing walls by an adhesive.

Preferably said adhesive is provided as double-sided adhesive pad.

Preferably said rod includes a locking spigot extending outwardly from said external surface and said locking facility comprises a rotating sleeve having a base plate which, in use, bears against said one of said support brackets and a slot angled with respect to said rod axis, in use said locking spigot engaging in said angled slot in a manner such that that rotation of the slot relative to said spigot generates the force to bias the support bracket against the adjacent facing wall.

Preferably said rod ends are incorporated in end caps, said locking spigot being incorporated in an end cap.

Preferably said assembly further includes an O-ring engageable in an annular groove provided in a wall contact surface of said end cap.

Preferably a said locking facility is provided at both ends of said rod.

Preferably said assembly further includes a pair of decorative caps configured to overlie connections between said rod and said support brackets.

Many variations in the way the invention may be performed will present themselves to those skilled in the art, upon reading the following description. The description should not be regarded as limiting but rather as an illustration, only, of one manner of performing the invention. Within the scope of the appended claims, where possible and appropriate any element or component should be taken as including any or all equivalents thereof whether or not specifically mentioned.

### Brief Description of the Drawings

One working embodiment of the invention will now be described with reference to the accompanying drawings in which:
- Figure 1:: shows a schematic view of a shower rod assembly according to the invention mounted between facing walls;
- Figure 2:: shows an isometric exploded view of fixing components including a support bracket and locking facility located at one end of the rod;
- Figure 3:: shows a reverse isometric view of the fixing components shown in Figure 2;
- Figure 4:: shows the components of Figures 2 & 3 assembled in a first or engaging position; and
- Figure 5:: shows a similar view to Figure 4 but with the components in a second or locking position

### Detailed Description of Working Embodiment

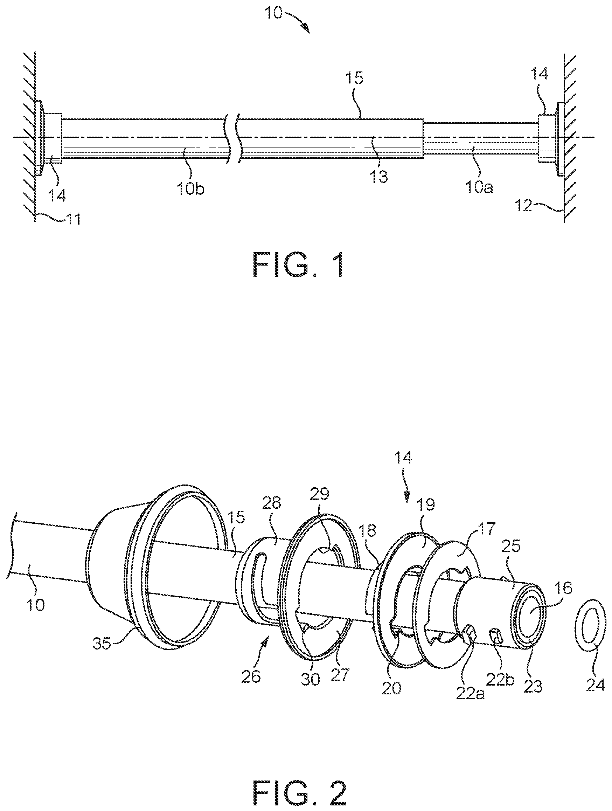

Referring firstly to Fig 1, a hollow tubular shower curtain rod 10 is shown fixed between facing walls 11 and 12. The rod has a rod axis 13 extending along the axial centre-line of the rod and end parts of the rod 10 are located in support brackets 14 in a manner that will be described in greater detail below.

The rod 10 is telescopic and comprises sections 10a and 10b aligned along axis 13, section 10a being of reduced diameter relative to section 10b and being slidably retained within a section 10b. Suitable locking means (not shown) are provided in the known manner between the sections 10a and 10b so that the relative positions of the two sections can be set to maintain the rod ends 16 (Figure 2) in engagement with walls 11 and 12. The rod has an external surface 15 extending between the rod ends 16 which, in the described embodiment, is arranged around and parallel to the rod axis 13.

The support brackets 14 are configured to engage the outer surface 15 of the rod 10 adjacent to the rod ends and are conveniently secured to the walls 11 and 12 by an adhesive, the adhesive being conveniently provided in the form of a double-sided adhesive pad 17. In the form shown, each support bracket 14 comprises a sleeve section 18 configured to slidingly receive the external surface 15 of the rod, and a mounting surface provided on one side of base plate 19, the mounting surface being configured to engage the walls 11 and 12 independently of the rod ends 16. The base plate 19 is preferably annular so that the bracket locates entirely around the external surface 15 of the rod.

Identical support brackets 14 are preferably, but not necessarily, provided at each end of the rail. As shown, the base plate 19 of at least one of the support brackets 14 includes a notch 20 which is aligned with a slot 21 extending axially along the wall of the sleeve section 18, the sleeve 18 and slot 21, when mounted on rod 10, extending parallel to the rod axis 13.

A particular feature of the invention is that a locking facility is provided between at least one of the support brackets 14, and the rod 10, that allows the rod to be located and supported in position and, while so supported, to be locked in position. The locking facility is provided in part on the rod, bears against the support bracket, and includes a displacement function which, in use, generates a locking force along the axis 13 which biases the respective support bracket against the adjacent wall. A further feature is that the locking force is preferably applied against a compressible medium, in this case adhesive pad 17. This has the added advantage that the pad also serves to secure the support brackets 14 but alternatives could be provided. For example, the apparatus could be configured so that the locking facility acts against a spring or other compressible member or surface.

The locking facility will now be described with reference to one end of the rod 10, those skilled in the art recognising that a duplicate facility will, in most cases, also be provided at the other end of the rod.

In the shown embodiment the rod 10 is provided with a first or locking spigot 22a that projects from the external surface 15 of the rod adjacent to, but spaced from, the end of the rod. The spigot 22a is preferably incorporated in a rod end cap 25 and is sized so that notch 20 and slot 21 can be displaced over the first spigot 22a, and also over second spigot 22b. The rod end 16, being the outwardly directed end face of the end cap 21, preferably includes a circular groove 23 which, in use, locates a rubber or other compressible O-ring 24.

To provide the locking facility the first spigot 22a acts in conjunction with a displaceable, preferably rotating, locking member 26, the locking member 26 comprising a pressure plate 27 configured to bear against base plate 19 of the support bracket, and a sleeve 28 extending from the pressure plate 27. The pressure plate 27 includes a central aperture 29 that is sized to be a sliding fit over sleeve 18 of the support bracket 14. In a similar fashion to base plate 19 of the support bracket 14, the pressure plate 27 includes a notch 30 sized to fit over spigot 22a, and a slot 31 formed in sleeve 28 that is aligned with the notch 29. It will be noted that slot 31 has a first section 32 extending from notch 29 parallel to axis 13, the section 32 merging into a second slot section 33 that extends circumferentially of sleeve 28 but is angled outwardly with respect to axis 13.

In use, the support bracket 14, adhesive pad 17, and locking member 26 are loosely assembled on the rod 10 and the rod positioned in place by extending section 10a relative to section 10b until the rod can be supported against gravity by frictional interaction of O-rings 24 with the respective adjacent wall surfaces 11 and 12. At this stage rod sections 10a and 10b are locked together in the known manner. With the rod in the desired position, the protective layer of the adhesive pads17 is removed, the notch 20 of support bracket 14 aligned with spigots 22a and 22b and the support bracket then displaced over end cap 25 until base plate 19 of the support bracket is secured to the wall by the adhesive pad 17. With the base plate 19 in position against the wall, the support bracket is prevented from rotation relative to the rod 10 by engagement of the slot 21 with the second spigot 22b, the height of the second spigot 22b being less than that of spigot 22a to enable the locking member 26 to rotate over the support bracket 14.

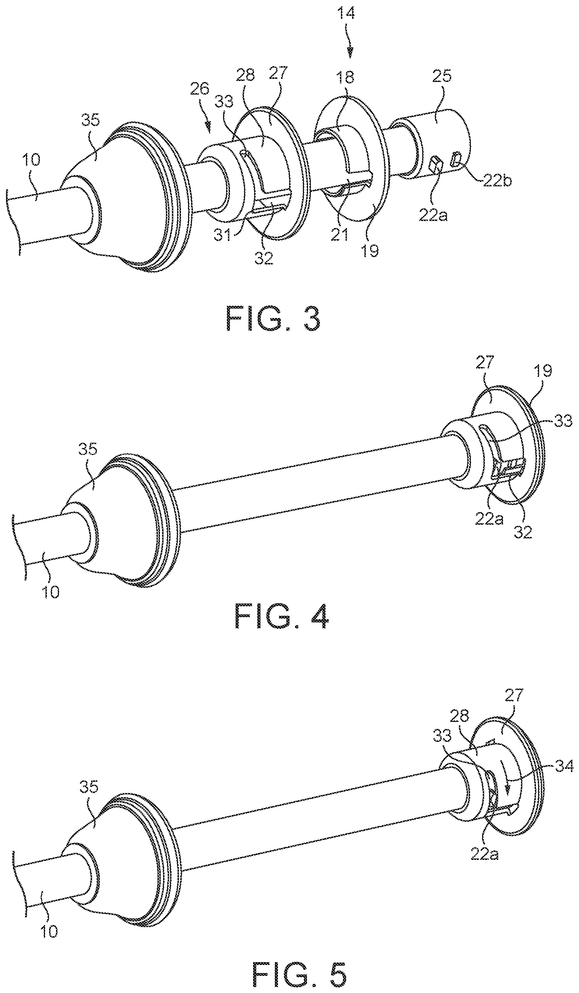

With the support bracket 14 secured in place, notch 30 in the pressure plate 27 is aligned with the spigot 22a and the pressure plate passed over sleeve 18 of the support bracket and over the end cap 25 until spigot 22a reaches the end of slot section 32 and is aligned with slot section 33. This is shown in Figure 4 and it should be appreciated that the lengths of sleeves 18 and 28, and the positioning of spigot 22a on end cap 25 are all set so that, when the components are in the positions shown in Figure 4, pressure plate 27 is firmly located against base plate 19 of the support bracket 14. The locking member 26 is then rotated relative to the support bracket 14 in the direction of arrow 34 in Figure 5. This causes the spigot 22a to enter second slot sections 33. Upon further rotation of the locking member 26 as shown in Figure 5 the inclined edges of slot section 33 act against spigot 22a thereby biasing the support bracket 14 against the adjacent facing wall surface.

Once the rod 10 and support brackets 14 have been firmly secured by application of the locking facility, decorative caps 35, also pre-assembled on the rod, may be displaced to overlie the support brackets and locking facility, and be engaged with the support brackets 14 or locking members 26.

It will thus be appreciated that the invention provides a relatively simple yet effective form of shower curtain rod assembly, and/or a method of mounting a shower curtain rod, and/or a method and apparatus for supplementing the mounting of a shower curtain rod which is simple to implement yet is highly effective in use.

## Claims

1. A method of securing a shower rod assembly between facing walls (11,12), the assembly comprising a telescopically adjustable rod (10) and support brackets (14), the rod having a rod axis (13), an external surface (15) extending along the rod axis, and rod ends (16); the support brackets being configured to engage the external surface of said rod and to engage the facing walls, the method including the steps of setting the length of said rod (10) to engage said rod ends (16) with said facing walls (11,12); engaging said support brackets (14) with the external surface of said rod, and fixing said support brackets to said facing walls independently of the rod ends (16), the method being **characterised in that** it further comprises engaging a locking facility between the rod (10) and at least one of said support brackets (14), and displacing the locking facility relative to the rod to generate a force directed to bias said at least one of said support brackets against an adjacent facing wall.

2. A method as claimed in claim 1 comprising securing said support brackets (14) to said facing walls (11,12) using an adhesive.

3. A method as claimed in claim 1 or claim 2 comprising securing said support brackets (14) to said facing walls (11,12) using double-sided adhesive pads.

4. A shower rod assembly for mounting a shower rod between facing walls 11,12), the assembly comprising a telescopically adjustable rod (10) and support brackets (14), the rod having a rod axis (13), an external surface (15) extending along the rod axis (13), and rod ends (16) configured to engage the facing walls (11,12); the support brackets being configured to engage the external surface (15) of said rod and having mounting surfaces (19) configured to engage said facing walls independently of the rod ends, wherein the assembly is **characterised in that** a locking facility (26) is operatively connected to the rod and to at least one of said support brackets (14), the configuration of the locking facility (26) being such that, in use, displacement of the locking facility (26) relative to the rod (10) generates a force directed to bias said at least one of said support brackets against an adjacent facing wall (11,12).

5. An assembly as claimed in claim 4 wherein said pair of support brackets (14) are configured to surround said end parts of said rod (10).

6. An assembly as claimed in claim 4 or claim 5 wherein said pair of support brackets (14) are configured for attachment to said facing walls by an adhesive.

7. An assembly as claimed in claim 6 wherein said adhesive is provided as a double-sided adhesive pad (17).

8. An assembly as claimed in any one of claims 4 to 7 wherein said rod (10) includes a locking spigot (22a) extending outwardly from said external surface (15) and said locking facility comprises a rotating sleeve (26) having a base plate (27) which, in use, bears against said one of said support brackets and a slot (33) angled with respect to said rod axis (13), in use said locking spigot (22a) engaging in said angled slot (33) in a manner such that rotation of the slot relative to said spigot generates the force to bias the support bracket against the adjacent facing wall.

9. An assembly as claimed in claim 8 wherein said rod ends are incorporated in end caps (25), said locking spigot (22a) being incorporated in an end cap.

10. An assembly as claimed in claim 9 further including an O-ring (24) engageable in an annular groove (23) provided in a wall contact surface of said end cap.

11. An assembly as claimed in any one of claims 4 to 10 wherein a said locking facility (26) is provided at both ends of said rod.

12. An assembly as claimed in any one of claims 4 to 11 further including a pair of decorative caps (35) configured to overlie connections between said rod and said support brackets.

## Patentansprüche

1. Ein Verfahren zum Befestigen einer Duschstangenanordnung zwischen gegenüberliegenden Wänden (11, 12), wobei die Anordnung eine teleskopisch verstellbare Stange (10) und Stützhalterungen (14) beinhaltet, wobei die Stange eine Stangenachse (13), eine Außenfläche (15), die sich entlang der Stangenachse erstreckt, und Stangenenden (16) aufweist; wobei die Stützhalterungen so konfiguriert sind, dass sie mit der Außenfläche der Stange in Eingriff kommen und mit den gegenüberliegenden Wänden in Eingriff kommen, wobei das Verfahren die Schritte des Einstellens der Länge der Stange (10), um die Stangenenden (16) mit den gegenüberliegenden Wänden (11, 12) in Eingriff zu bringen; des Ineingriffbringens der Stützhalterungen (14) mit der Außenfläche der Stange und des Fixierens der Stützhalterungen an den gegenüberliegenden Wänden unabhängig von den Stangenenden (16) umfasst, wobei das Verfahren **dadurch gekennzeichnet ist, dass** es ferner das Ineingriffbringen einer Verriegelungseinrichtung zwischen der Stange (10) und mindestens einer der Stützhalterungen (14) und das Verschieben der Verriegelungseinrichtung relativ zu der Stange beinhaltet, um eine Kraft zu erzeugen, die so gerichtet ist, dass sie die mindestens eine der Stützhalterungen gegen eine benachbarte gegenüberliegende Wand vorspannt.

2. Ein Verfahren gemäß Anspruch 1, das das Befestigen der Stützhalterungen (14) an den gegenüberliegenden Wänden (11, 12) unter Verwendung eines Klebstoffs beinhaltet.

3. Ein Verfahren gemäß Anspruch 1 oder Anspruch 2, das das Befestigen der Stützhalterungen (14) an den gegenüberliegenden Wänden (11, 12) unter Verwendung doppelseitiger Klebepads beinhaltet.

4. Eine Duschstangenanordnung zum Montieren einer Duschstange zwischen gegenüberliegenden Wänden (11, 12), wobei die Anordnung eine teleskopisch verstellbare Stange (10) und Stützhalterungen (14) beinhaltet, wobei die Stange eine Stangenachse (13), eine Außenfläche (15), die sich entlang der Stangenachse (13) erstreckt, und Stangenenden (16) aufweist, die so konfiguriert sind, dass sie mit den gegenüberliegenden Wänden (11, 12) in Eingriff kommen; wobei die Stützhalterungen so konfiguriert sind, dass sie mit der Außenfläche (15) der Stange in Eingriff kommen und Montageflächen (19) aufweisen, die so konfiguriert sind, dass sie unabhängig von den Stangenenden mit den gegenüberliegenden Wänden in Eingriff kommen, wobei die Anordnung **dadurch gekennzeichnet ist, dass** eine Verriegelungseinrichtung (26) mit der Stange und mit mindestens einer der Stützhalterungen (14) wirkverbunden ist, wobei die Konfiguration der Verriegelungseinrichtung (26) so ist, dass im Gebrauch die Verschiebung der Verriegelungseinrichtung (26) relativ zu der Stange (10) eine Kraft erzeugt, die so gerichtet ist, dass sie die mindestens eine der Stützhalterungen gegen eine benachbarte gegenüberliegende Wand (11, 12) vorspannt.

5. Eine Anordnung gemäß Anspruch 4, wobei das Paar von Stützhalterungen (14) so konfiguriert ist, dass es die Endteile der Stange (10) umgibt.

6. Eine Anordnung gemäß Anspruch 4 oder Anspruch 5, wobei das Paar von Stützhalterungen (14) zur Anbringung an den gegenüberliegenden Wänden mittels eines Klebstoffs konfiguriert ist.

7. Eine Anordnung gemäß Anspruch 6, wobei der Klebstoff als doppelseitiges Klebepad (17) bereitgestellt wird.

8. Eine Anordnung gemäß einem der Ansprüche 4 bis 7, wobei die Stange (10) einen Verriegelungszapfen (22a) umfasst, der sich von der Außenfläche (15) nach außen erstreckt, und die Verriegelungseinrichtung eine Drehhülse (26) beinhaltet, die eine Grundplatte (27), die im Gebrauch an der einen der Stützhalterungen anliegt, und einen Schlitz (33), der in Bezug auf die Stangenachse (13) abgewinkelt ist, aufweist, wobei im Gebrauch der Verriegelungszapfen (22a) in den abgewinkelten Schlitz (33) eingreift, so dass eine Drehung des Schlitzes relativ zu dem Zapfen die Kraft erzeugt, um die Stützhalterung gegen die benachbarte gegenüberliegende Wand vorzuspannen.

9. Eine Anordnung gemäß Anspruch 8, wobei die Stangenenden in Endkappen (25) integriert sind, wobei der Verriegelungszapfen (22a) in eine Endkappe integriert ist.

10. Eine Anordnung gemäß Anspruch 9, die ferner einen O-Ring (24) umfasst, der in eine ringförmige Nut (23) eingreifen kann, die in einer Wandkontaktfläche der Endkappe bereitgestellt wird.

11. Eine Anordnung gemäß einem der Ansprüche 4 bis 10, wobei eine Verriegelungseinrichtung (26) an beiden Enden der Stange bereitgestellt wird.

12. Eine Anordnung gemäß einem der Ansprüche 4 bis 11, die ferner ein Paar von Zierkappen (35) umfasst, die so konfiguriert sind, dass sie Verbindungen zwischen der Stange und den Stützhalterungen überdecken.

## Revendications

1. Un procédé d'assujettissement d'un ensemble de tringle de douche entre des parois en vis-à-vis (11, 12), l'ensemble comprenant une tringle (10) ajustable de manière télescopique et des consoles de support (14), la tringle ayant un axe de tringle (13), une surface externe (15) s'étendant le long de l'axe de tringle, et des extrémités de tringle (16) ; les consoles de support étant configurées pour se mettre en prise avec la surface externe de ladite tringle et pour se mettre en prise avec les parois en vis-à-vis, le procédé incluant les étapes de réglage de la longueur de ladite tringle (10) pour mettre en prise lesdites extrémités de tringle (16) avec lesdites parois en vis-à-vis (11, 12) ; de mise en prise desdites consoles de support (14) avec la surface externe de ladite tringle, et de fixation desdites consoles de support auxdites parois en vis-à-vis indépendamment des extrémités de tringle (16), le procédé étant **caractérisé en ce qu'**il comprend en outre la mise en prise d'un dispositif de verrouillage entre la tringle (10) et au moins l'une desdites consoles de support (14), et le déplacement du dispositif de verrouillage relativement à la tringle pour générer une force dirigée pour solliciter ladite au moins une desdites consoles de support contre une paroi en vis-à-vis adjacente.

2. Un procédé tel que revendiqué dans la revendication 1 comprenant l'assujettissement desdites consoles de support (14) auxdites parois en vis-à-vis (11, 12) en utilisant un adhésif.

3. Un procédé tel que revendiqué dans la revendication 1 ou la revendication 2 comprenant l'assujettissement desdites consoles de support (14) auxdites parois en vis-à-vis (11, 12) en utilisant des pastilles adhésives double face.

4. Un ensemble de tringle de douche pour monter une tringle de douche entre des parois en vis-à-vis (11, 12), l'ensemble comprenant une tringle (10) ajustable de manière télescopique et des consoles de support (14), la tringle ayant un axe de tringle (13), une surface externe (15) s'étendant le long de l'axe de tringle (13), et des extrémités de tringle (16) configurées pour se mettre en prise avec les parois en vis-à-vis (11, 12) ; les consoles de support étant configurées pour se mettre en prise avec la surface externe (15) de ladite tringle et ayant des surfaces de montage (19) configurées pour se mettre en prise avec lesdites parois en vis-à-vis indépendamment des extrémités de tringle, l'ensemble étant **caractérisé en ce qu'**un dispositif de verrouillage (26) est raccordé de manière opérationnelle à la tringle et à au moins l'une desdites consoles de support (14), la configuration du dispositif de verrouillage (26) étant telle que, en utilisation, un déplacement du dispositif de verrouillage (26) relativement à la tringle (10) génère une force dirigée pour solliciter ladite au moins une desdites consoles de support contre une paroi en vis-à-vis (11, 12) adjacente.

5. Un ensemble tel que revendiqué dans la revendication 4 dans lequel ladite paire de consoles de support (14) sont configurées pour entourer lesdites parties d'extrémité de ladite tringle (10).

6. Un ensemble tel que revendiqué dans la revendication 4 ou la revendication 5 dans lequel ladite paire de consoles de support (14) sont configurées pour s'attacher auxdites parois en vis-à-vis par un adhésif.

7. Un ensemble tel que revendiqué dans la revendication 6 dans lequel ledit adhésif est fourni sous la forme d'une pastille adhésive double face (17).

8. Un ensemble tel que revendiqué dans n'importe laquelle des revendications 4 à 7 dans lequel ladite tringle (10) inclut un ergot de verrouillage (22a) s'étendant vers l'extérieur depuis ladite surface externe (15) et ledit dispositif de verrouillage comprend un manchon rotatif (26) ayant une plaque de base (27) qui, en utilisation, appuie contre ladite une desdites consoles de support et une fente (33) en biais par rapport audit axe de tringle (13), en utilisation ledit ergot de verrouillage (22a) se mettant en prise dans ladite fente en biais (33) d'une manière telle qu'une rotation de la fente relativement audit ergot génère la force pour solliciter la console de support contre la paroi en vis-à-vis adjacente.

9. Un ensemble tel que revendiqué dans la revendication 8 dans lequel lesdites extrémités de tringle sont incorporées dans des capuchons d'extrémité (25), ledit ergot de verrouillage (22a) étant incorporé dans un capuchon d'extrémité.

10. Un ensemble tel que revendiqué dans la revendication 9 incluant en outre un joint torique (24) pouvant se mettre en prise dans une rainure annulaire (23) fournie dans une surface de contact de paroi dudit capuchon d'extrémité.

11. Un ensemble tel que revendiqué dans n'importe laquelle des revendications 4 à 10 dans lequel un dit dispositif de verrouillage (26) est fourni aux deux extrémités de ladite tringle.

12. Un ensemble tel que revendiqué dans n'importe laquelle des revendications 4 à 11 incluant en outre une paire de capuchons décoratifs (35) configurés pour recouvrir des raccords entre ladite tringle et lesdites consoles de support.
